# FASCICULE DE BREVET EUROPEEN

(11) **EP 0 933 513 B1**
(45) Date de publication et mention de la délivrance du brevet: **02.05.2003**
(21) Numéro de dépôt: 98403208.6
(22) Date de dépôt: 18.12.1998
(51) Int. Cl.: F02B 31/06

(54) **Dispositif d'admission pour moteur à combustion interne**
Ansaugvorrichtung für eine Brennkraftmaschine
Intake device for internal combustion engine

(30) Priorité: 23.12.1997 FR 9716312
(43) Date de publication de la demande: 04.08.1999
(73) Titulaire: Renault s.a.s., 92100 Boulogne Billancourt (FR)
(72) Inventeur: Floch, Alain, 91460 Marcoussis (FR)

(56) Documents cités:
- EP-A- 0 500 123
- WO-A-98/34017
- US-A- 4 240 387
- US-A- 4 700 669

## Description

La présente invention concerne un dispositif d'admission pour moteur à combustion interne destiné notamment à équiper un véhicule automobile. La présente invention concerne plus particulièrement un dispositif d'admission comportant des moyens obturateurs mobiles destinés à provoquer un mouvement aérodynamique ordonné des gaz dans les chambres de combustion.

Les normes concernant la pollution et la consommation des moteurs à combustion interne, et en particulier des moteurs à essence ou à allumage commandé, se sévérisent chaque jour davantage dans l'ensemble des pays industrialisés. L'industrie automobile est donc occupée aujourd'hui à trouver des solutions techniques pour satisfaire à ces contraintes et ce sans trop pénaliser ni les performances des moteurs ni leur prix de revient.

Il est connu de réduire la consommation en carburant d'un moteur à combustion interne, en fonctionnant avec des mélanges carburés de richesse inférieure à 1, encore appelés mélanges pauvres. Pour permettre toutefois une bonne combustion d'un tel mélange pauvre, il s'avère nécessaire de générer une forte turbulence à l'intérieur des chambres de combustion, les caractéristiques de cette turbulence devant être adaptées aux conditions de fonctionnement du moteur : régime, charge, température d'eau, etc.

Différents dispositifs ont été développés pour opérer une forte turbulence. On peut citer le brevet FR-A-2.486.156 qui décrit un moteur qui comporte en plus d'un conduit principal d'admission alimentant une chambre de combustion, un conduit secondaire d'admission de diamètre plus petit dont l'orifice de sortie est situé juste avant la soupape d'admission et orienté de façon que le jet de gaz provenant du conduit secondaire engendre des tourbillons hélicoïdaux générant une turbulence encore appelée "swirl".

Des études ont montré qu'une autre forme de turbulence, appelée "tumble", formée par des tourbillons évoluant en rouleau (d'axe de rotation horizontal c'est-à-dire perpendiculaire à l'axe du cylindre, contrairement au "swirl" d'axe vertical c'est-à-dire parallèle à l'axe du cylindre) est encore plus favorable, dans certaines conditions de fonctionnement du moteur, que le "swirl".

Le document WO91/14858 divulgue de nombreux modes de réalisation de moyens obturateurs pilotés qui coopèrent avec les conduits d'admission ménagés dans la culasse d'un moteur à combustion interne pour produire une turbulence de type "tumble". Les solutions décrites requièrent toutefois une implantation des moyens obturateurs dans le voisinage immédiat des soupapes d'admission. Une autre solution est proposée par le document US4240387.

Or la conception moderne d'un moteur à combustion interne limite la place disponible dans la culasse au voisinage de la chambre de combustion, du fait notamment du nombre élevé de soupapes auquel s'ajoute l'implantation des injecteurs, des bougies (pour les moteurs à allumage commandé), des chambres d'eau de refroidissement ou encore des passages d'huile de lubrification.

Le but de l'invention est donc de proposer un dispositif d'admission pour moteur à combustion interne générateur d'un mouvement ordonné de type de "tumble" des gaz dans les chambres de combustion, de conception relativement simple et économique, qui tout en permettant un positionnement éloigné des moyens obturateurs par rapport aux chambres de combustion permettent d'obtenir un niveau élevé de turbulence dans ces dernières.

Le dispositif d'admission pour moteur à combustion interne selon l'invention, comporte au moins un conduit d'admission ménagé dans la culasse du moteur pour alimenter une chambre de combustion à travers un orifice obturé par une soupape, ce conduit coopérant avec des moyens obturateurs pilotés aptes à produire sélectivement un mouvement aérodynamique ordonné dans la chambre de combustion.

Selon l'invention, le dispositif d'admission est caractérisé en ce que d'une part, le conduit d'admission présente un coude marqué et en ce que d'autre part, les moyens obturateurs sont formés par un boisseau débouchant dans la partie supérieure du conduit d'admission en amont, dans le sens de l'écoulement de l'air, dudit coude. Le boisseau est disposé à l'intérieur de la culasse et coopère avec le circuit d'admission s'étendant en amont du conduit d'admission, dans le sens de l'écoulement des gaz.

Ainsi, grâce à la combinaison de l'implantation du boisseau en partie supérieure de conduit d'admission et de la forme adaptée de ce dernier, il est possible d'obtenir un niveau élevé de turbulence des gaz dans la chambre de combustion malgré l'éloignement du boisseau de la chambre de combustion.

Selon une autre caractéristique du dispositif d'admission objet de l'invention, entre l'orifice d'admission et le boisseau, de l'aval vers l'amont dans le sens de l'écoulement des gaz, le conduit d'admission comprend une première portion tubulaire s'étendant parallèlement à la tige de la soupape, un coude et une seconde portion sensiblement tubulaire.

Selon une autre caractéristique du dispositif d'admission objet de l'invention, la première portion tubulaire s'étend sur une hauteur adaptée d'au minimum 5 mm et forme un angle avec l'axe du cylindre correspondant compris entre 15° et 45°.

Selon une autre caractéristique du dispositif d'admission objet de l'invention, la seconde portion tubulaire forme un angle avec l'axe du cylindre correspondant, compris entre 90° et 70°.

Selon un autre mode particulier de réalisation du dispositif d'admission objet de l'invention, le boisseau est porté par une bride s'intercalant entre les tubulures du collecteur d'admission et la culasse.

On comprendra mieux les buts, aspects et avantages de la présente invention, d'après la description présentée ci-après d'un mode de réalisation de l'invention, donné à titre d'exemple non limitatif, en se référant au dessin annexé, dans lequel :
la figure 1 est une vue schématique partielle d'un moteur à combustion interne comportant un dispositif d'admission selon l'invention ;
les figures 2a et 2b sont des vues similaires en coupe dans l'axe de l'obturateur représenté à la figure 1, selon deux modes de réalisation des conduits d'admissions conduits jumelés ou séparés.

Seuls les éléments nécessaires à la compréhension de l'invention ont été représentés. Pour faciliter la lecture des dessins, on utilisera les mêmes références pour désigner les mêmes pièces d'une figure à l'autre.

Les figures représentent un moteur à combustion interne référencé 1, du type multicylindre à deux soupapes d'admission par cylindre. Un seul cylindre 2 a été représenté, les autres cylindres du moteur étant identiques à celui illustré.

Le cylindre 2 est surmonté par une culasse 3 formant couvercle. Deux conduits d'admission 4 et 5 traversent la culasse pour déboucher dans le cylindre 2. Ces conduits s'étendent transversalement de part et d'autre d'un plan médian vertical PP' passant par l'axe du cylindre.

Les deux conduits d'admission 4 et 5 débouchent dans la face inférieure 11 de la culasse 3 définissant le toit de la chambre de combustion 6, par deux orifices distincts, respectivement 7 et 8, commandés par des soupapes d'admission, respectivement 9 et 10. La face inférieure 11 définit un toit à deux pentes dont l'arête s'étend perpendiculairement au plan PP', les soupapes d'admission forment un angle compris entre 15° et 45° avec l'axe du cylindre 2.

De façon tout à fait classique, la culasse 3 est munie de conduits d'échappement non figurés, disposés sensiblement symétriquement aux conduits d'admission 4 et 5 par rapport à l'arête du toit 11, d'une bougie d'allumage (dans le cas d'un moteur à allumage commandé), ainsi que d'un injecteur à carburant qui débouche selon le type de moteur considéré, soit directement dans la chambre de combustion 6 pour les moteurs à injection directe, soit dans un des conduits d'admission 4,5 pour les moteurs à injection indirecte.

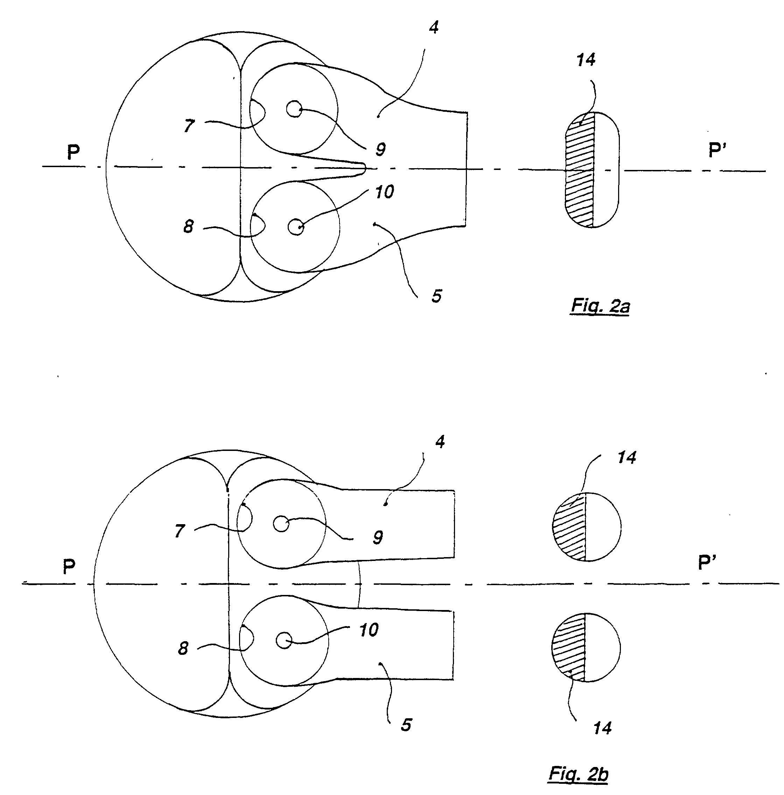

Les deux conduits d'admission 4 et 5 peuvent être du type séparés, conformément à la figure 2b, ou bien encore du type siamoisés ou jumelés, conformément à la figure 2a. Ces conduits 4 et 5 sont plus particulièrement conformés pour favoriser le remplissage de la chambre de combustion. Ces conduits sont donc adaptés pour présenter de bonnes qualités aérodynamiques (polaire de vitesse sensiblement uniforme autour des soupapes).

Par ailleurs, ces conduits qui s'étendent sur une longueur d'environ 60 à 70 mm, sont formés, de l'aval vers l'amont dans le sens de l'écoulement des gaz (air ou du mélange air-carburant, selon le type de moteur), par une première portion tubulaire 41 s'étendant depuis l'orifice d'admission 7, un coude 42 relativement marqué et une seconde portion sensiblement tubulaire 43.

La première portion tubulaire 41 s'étend parallèlement à la tige de la soupape 9 c'est-à-dire en formant un angle entre 15 et 45° avec l'axe du cylindre 2, sur une hauteur adaptée, au minimum 5 mm et de préférence supérieure à 10 mm, de façon à engendrer une hauteur de chapelle importante. La seconde portion tubulaire 43 est fortement inclinée par rapport à l'axe des soupapes et donc par rapport à l'axe de la première portion tubulaire 41. L'angle formé entre la seconde portion tubulaire 42 et les soupapes 4,5 est d'au moins 35° et de préférence cette seconde portion forme une angle compris entre 70° et 90° avec l'axe du cylindre 2.

L'extrémité commune des conduits 4 et 5 ou les deux extrémités distinctes (selon que les conduits sont jumelés ou séparés) s'étendant à l'opposé de la chambre de combustion 6, débouchent sur une face latérale de la culasse 3, où elles sont raccordées respectivement à une ou deux conduites tubulaires d'aspiration 12 du collecteur d'admission par l'intermédiaire d'une bride 13. La ou les conduites 12 débouchent dans le volume répartiteur d'air (plénum) du collecteur d'admission non figuré, le circuit d'admission se prolongeant ensuite de manière connue à l'atmosphère par un boîtier papillon et un filtre à air.

Les moyens obturateurs portés par la bride 13 se composent essentiellement d'un boisseau 14 venant se loger dans la partie supérieure de la bride. Ce boisseau 14 peut être monobloc et interférer avec les circuits d'admission de tous les cylindres du moteur ou bien encore être spécifique au cylindre considéré.

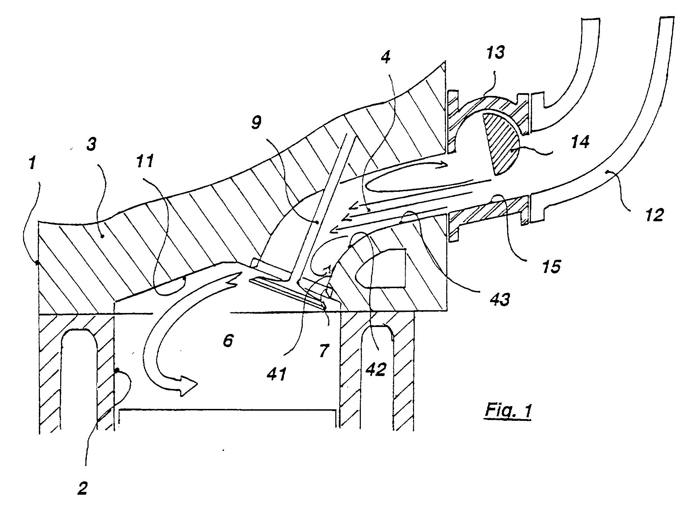

Le boisseau 14 s'étendant perpendiculairement à l'axe du cylindre 2, est mobile entre deux positions : une position dite "ouverte" dans laquelle le passage ou les passages d'admission 15, ménagés à travers la bride 13 pour assurer la continuité entre l'extrémité commune ou séparée des conduits d'admission et la ou les tubulures d'admission, sont libres de tout obstacle et une position "fermée" représentée à la figure 1 dans laquelle le boisseau est en saillie dans le ou les passages 15 de façon à générer une restriction de la section de passage d'une valeur adaptée. De préférence, la portion de passage obturée est comprise entre 50 et 75 % de la section de passage totale.

Lorsque le boisseau 14 est en position fermée, c'est-à-dire lorsque la partie supérieure du ou des passages 15 est obturée, les gaz d'admission sont accélérés par effet venturi au droit de la restriction et se trouvent dirigés à l'entrée des conduits 4 et 5 dans leurs parties inférieures, pour être ensuite propulsés dans leurs parties supérieures au passage des coudes 42, qui provoquent le décollement des veines gazeuses, et ainsi débouchés dans la chambre de combustion par le dessus des soupapes 9 et 10, ce qui permet de générer dans la chambre de combustion 6, un fort mouvement tourbillonnaire de type "tumble".

Le boisseau 14 coopère par l'intermédiaire d'organes de manoeuvre non figurés avec des moyens d'entraînement pilotés également non figurés. Ces moyens d'entraînement sont constitués par exemple par un actionneur électromécanique commandé par un circuit électronique de commande alimenté par les signaux engendrés par un ou plusieurs capteurs. Ce circuit est avantageusement constitué par le système électronique de contrôle moteur qui pilote par ailleurs l'injection du carburant suivant les conditions de fonctionnement du moteur.

Sous l'action de ces moyens d'entraînement aux valeurs prises par un ou plusieurs paramètres caractéristiques du fonctionnement du moteur tels que la charge et/ou le régime, le boisseau 14 est sélectivement manoeuvré entre sa première position et sa seconde position.

Conformément à la description qui précède, le fonctionnement du dispositif est le suivant.

Lorsque les conditions de fonctionnement du moteur nécessitent une turbulence de type "tumble" de la charge dans la chambre de combustion 6, comme par exemple à faible charge ou à charge partielle, les moyens d'entraînement manoeuvrent le boisseau 14 dans sa position dite "fermée" représentée à la figure 1. Le flux gazeux qui traverse alors la restriction subis une mise en vitesse et grâce à la forme des conduits d'admission 4 et 5 pénètre dans la chambre de combustion 6 sous la forme d'un mouvement aérodynamique ordonné de type "tumble".

Dans les autres conditions de fonctionnement du moteur et notamment à forte charge, les moyens d'entraînement pilotés manoeuvrent le boisseau 14 dans sa première position dite "ouverte" non figurée. Le flux gazeux traverse alors librement la bride 13 et pénètre avec le minimum de turbulence dans la chambre de combustion grâce à la forme favorisant le remplissage des conduits d'admission 4 et 5, ce qui permet d'optimiser les performances du moteur.

Bien entendu, l'invention n'est nullement limitée au mode de réalisation décrit et illustré qui n'a été donné qu'à titre d'exemple.

Au contraire, l'invention comprend tous les équivalents techniques des moyens décrits ainsi que leurs combinaisons si celles-ci sont effectuées suivant son esprit.

Ainsi, on peut intégrer directement de fonderie à la culasse 3, la bride 13 ainsi qu'éventuellement une partie de la ou des conduites tubulaires 12 et ce, pour limiter les opérations d'assemblage du moteur. De la sorte, le boisseau 14 inséré dans un logement correspond de la culasse 3, coopère directement avec les conduits d'admission 4 et 5.

Ainsi, le boisseau 14 peut être piloté de façon à modifier progressivement l'aérodynamique des gaz d'admission suivant les conditions de fonctionnement du moteur. Ainsi, la valeur de la restriction définie dans le passage 15 par le boisseau 14 est adaptée à chaque point de fonctionnement du moteur, par exemple à partir d'une cartographie mémorisée par le système de contrôle moteur.

## Revendications

1. Dispositif d'admission pour moteur à combustion interne comportant au moins un conduit d'admission (4,5) ménagé dans la culasse (3) du moteur pour alimenter une chambre de combustion (6) à travers un orifice (7,8) obturé par une soupape (9,10), ledit conduit coopérant avec des moyens obturateurs pilotés aptes à produire sélectivement un mouvement aérodynamique ordonné de type tumble dans la chambre de combustion (6), **caractérisé en ce que** le conduit d'admission (4,5) présente un coude marqué (42) et **en ce que** lesdits moyens obturateurs sont formés par un boisseau (14) débouchant dans la partie supérieure du conduit d'admission (4,5) en amont, dans le sens de l'écoulement de l'air, dudit coude(42), et **en ce qu'**entre l'orifice d'admission (7,8) et le boisseau (14), le conduit d'admission comprend une première portion tubulaire (41) s'étendant parallèlement à la tige de la soupape (9, 10), un coude (42) et une seconde portion sensiblement tubulaire (43) ledit boisseau (14) est disposé à l'extérieur de la culasse (3) et coopère avec le circuit d'admission (15,12) d'air s'étendant en amont du conduit d'admission (4,5), dans le sens de l'écoulement de l'air.

2. Dispositif d'admission pour moteur à combustion interne selon la revendication 1, caractérisé en ce ladite première portion tubulaire (41) s'étend sur une hauteur adaptée d'au minimum 5 mm et forme un angle avec l'axe du cylindre correspondant (42) compris entre 15° et 45°.

3. Dispositif d'admission pour moteur à combustion interne selon l'une quelconque des revendications 1 à 2, **caractérisé en ce que** ladite seconde portion tubulaire (41) forme un angle avec l'axe du cylindre correspondant (2) compris entre 90° et 70°.

4. Dispositif d'admission pour moteur à combustion interne selon l'une des revendications 1 à 3, **caractérisé en ce que** ledit boisseau (14) est porté par une bride (13) s'intercalant entre les tubulures (12) du collecteur d'admission et la culasse (3).

## Patentansprüche

1. Einlassanordnung für einen Verbrennungsmotor, die mindestens eine Einlassleitung (4, 5) aufweist, die im Zylinderkopf (3) des Motors ausgebildet ist zur Speisung einer Verbrennungskammer (6) durch eine Öffnung (7, 8) hindurch, die durch ein Ventil (9, 10) verschließbar ist, wobei diese Leitung mit einer steuerbaren Verschlussanordnung zusammenwirkt, die wahlweise eine vorgegebene aerodynamische Bewegung vom Typ tumble in der Verbrennungskammer (6) hervorruft, **dadurch gekennzeichnet, dass** die Einlassleitung (4, 5) eine ausgeprägte Krümmung (42) aufweist, dass die Verschlussanordnung aus einem Küken (14) besteht, das in den oberen Abschnitt der Einlassleitung (4, 5) stromaufwärts der Krümmung (42) in Richtung der strömenden Luft gesehen eingesetzt ist und dass die Einlassleitung zwischen der Einlassöffnung (7, 8) und dem Küken (14) ein erstes rohrförmiges Teil (41) aufweist, das sich parallel zum Ventilschaft (9, 10) erstreckt, eine Krümmung (42) und ein zweites im wesentlichen rohrförmiges Teil (43), wobei das Küken (14) außerhalb des Zylinderkopfs (3) angeordnet ist und mit dem Einlasskreis (15, 12) für die Luft zusammenwirkt, der stromaufwärts der Einlassleitung (4, 5) in Richtung der strömenden Luft gesehen angeordnet ist.

2. Einlassanordnung für einen Verbrennungsmotor nach Anspruch 1, **dadurch gekennzeichnet, dass** sich das erste rohrförmige Teil (41) auf einer Höhe erstreckt, die mindestens 5 mm beträgt und einen Winkel mit der Achse des zugehörigen Zylinders (2) einschließt, der zwischen 15° und 45° liegt.

3. Einlassanordnung für einen Verbrennungsmotor nach einem der Ansprüche 1 bis 2, **dadurch gekennzeichnet, dass** das zweite rohrförmige Teil (43) einen Winkel mit der Achse des zugehörigen Zylinders (2) einschließt, der zwischen 90° und 70° liegt.

4. Einlassanordnung für einen Verbrennungsmotor nach einem der Ansprüche 1 bis 3, **dadurch gekennzeichnet, dass** das Küken (14) von einem Flansch (13) getragen wird, der zwischen den Rohrleitungen (12) des Einlasssammlers und dem Zylinderkopf (3) angeordnet ist

## Claims

1. An induction arrangement for an internal combustion engine comprising at least induction duct (4, 5) in the cylinder head (3) of the engine for supplying a combustion chamber (6) by way of a port (7, 8) closed by a valve (9, 10), said duct cooperating with pilot-controlled closure means capable of selectively producing an orderly aerodynamic movement of tumble type in the combustion chamber (6), **characterised in that** the induction duct (4, 5) has a marked bend (42) and that said closure means are formed by a rotary gate member (14) issuing into the upper part of the induction duct (4, 5) upstream of said bend (42) in the direction of flow of the air, and that between the induction port (7, 8) and the rotary gate member (14) the induction conduit comprises a first tubular portion (41) extending parallel to the stem of the valve (9, 10), a bend (42) and a second substantially tubular portion (43), said rotary gate member (14) is disposed on the exterior of the cylinder head (3) and co-operates with the air induction circuit (15, 12) extending upstream of the induction duct (4, 5) in the direction of flow of the air.

2. An induction arrangement for an internal combustion engine according to claim 1 **characterised in that** said first tubular portion (41) extends over a suitable height of a minimum of 5 mm and forms an angle of between 15° and 45° with the axis of the corresponding cylinder (2).

3. An induction arrangement for an internal combustion engine according to either one of claims 1 and 2 **characterised in that** said second tubular portion (21) forms an angle of between 90° and 70° with the axis of the corresponding cylinder (2).

4. An induction arrangement for an internal combustion engine according to one of claims 1 to 3 **characterised in that** said rotary gate member (14) is carried by a flange (13) which is interposed between the pipes (12) of the induction manifold and the cylinder head (3).
